# EUROPÄISCHE PATENTSCHRIFT

(11) **EP 3 135 970 B1**
(45) Veröffentlichungstag und Bekanntmachung des Hinweises auf die Patenterteilung: **09.05.2018**
(21) Anmeldenummer: 16183162.3
(22) Anmeldetag: 08.08.2016
(51) Int. Cl.: F16K 31/56, B05B 1/16, F16K 11/074, F16K 31/00

(54) **SANITÄRE UMSCHALTEINRICHTUNG UND SANITÄRARMATUR**
SANITARY SWITCHING DEVICE AND BATHROOM FITTING
DISPOSITIF DE COMMUTATION SANITAIRE ET ROBINETTERIE

(30) Priorität: 25.08.2015 DE 102015216180
(43) Veröffentlichungstag der Anmeldung: 01.03.2017
(73) Patentinhaber: Hansgrohe SE, 77761 Schiltach (DE)
(72) Erfinder: GLUNK, Günter, 78737 Fluorn-Winzeln (DE); KINLE, Ulrich, 77773 Schenkenzell (DE); MELLE, Fabian, 77799 Ortenberg (DE); RINGWALD, Anja, 77716 Hofstetten (DE)
(74) Vertreter: Patentanwälte Ruff, Wilhelm, Beier, Dauster & Partner mbB

(56) Entgegenhaltungen:
- EP-A1- 1 577 016
- DE-T2- 69 518 886
- US-A1- 2005 258 274
- US-B1- 6 622 945

## Beschreibung

Die Erfindung bezieht sich auf eine sanitäre Umschalteinrichtung mit einem ersten Wasseranschluss, mehreren zweiten Wasseranschlüssen, einem drehbeweglichen Schaltkörper, der zur drehstellungsabhängigen Freigabe oder Absperrung eines Fluidflusses zwischen dem ersten Wasseranschluss einerseits und den mehreren zweiten Wasseranschlüssen andererseits ausgebildet ist, einem axial beweglichen Betätigungselement und einem Übertragungsmittel, das die Axialbewegung des Betätigungselements in die Drehbewegung des Schaltkörpers überträgt, sowie auf eine Sanitärarmatur mit einer solchen sanitären Umschalteinrichtung.

Bei der Sanitärarmatur kann es sich z.B. um eine Kopf- und/oder Handbrause mit verschiedenen Strahlarten handeln, zwischen den umgeschaltet werden kann.

Aus der Offenlegungsschrift DE 10 2009 008 196 A1 ist eine Brause mit einem Umschaltventil bekannt, das einen Wassereinlass und eine erste und eine zweite Auslassöffnung sowie einen mehrere Vorsprünge umfassenden Ventilschließkörper und einen Druckknopf mit einem mehrere Vorsprünge umfassenden Schaft aufweist. Mittels Drückens des Druckknopfes kann ein Verdrehen des Ventilschließkörpers von einer stabilen Drehposition, in welcher der Ventilschließkörper die erste Auslassöffnung schließt und die zweite Auslassöffnung öffnet, in eine nächste ausgelöst werden, in welcher der Ventilschließkörper die zweite Auslassöffnung schließt und die erste Auslassöffnung öffnet. Dabei bewirkt ein Schieben der schaftseitigen Vorsprünge an den ventilschließkörperseitigen Vorsprüngen das Verdrehen des Ventilschließkörpers um seine Drehachse, die koaxial zu einer Längsachse des Schafts ist. Außerdem wird der Ventilschließkörper dabei entlang der Drehachse bzw. der Längsachse von einem Schließkörpersitz in Form einer Zwischenwand abgehoben, was zu Turbulenzen im fließenden Wasser und damit verbundenen Fließgeräuschen führen kann.

In der Patentschrift DE 695 18 886 T2 ist ein Mehrfunktionsbrausekopf mit einem Sperrklinkenmechanismus offenbart, bei dem eine Sperrklinke durch einen federvorgespannten Druckknopf über einen Sperrklinkenradnocken mittels Schubkraft betätigt wird und sich dadurch eine mit der Sperrklinke gekoppelte Verschlussplatte über eine vorbestimmte Bogenstrecke bewegt.

In der Offenlegungsschrift US 2005/0258274 A1 ist ein Wassersprüher mit pistolengriffförmiger Betätigungseinheit und einer Steuereinheit mit einem Klinkenrad offenbart, das über einen nutzerbetätigbaren Bedienhebel und ein Stangenelement mit endseitiger, mit dem Klinkenrad in Eingriff stehender Sperrklinke zugkraftbetätigt wird, um ein Wasserrad zu drehen, mit dem selektiv Wasserdurchgänge freigegeben oder abgesperrt werden, wodurch ein jeweils gewünschtes Sprühmuster eingestellt werden kann.

In der Patentschrift US 6,622,945 B1 und der Offenlegungsschrift EP 1 577 016 A1 sind weitere herkömmliche Brauseköpfe mit Sperrklinkenmechanismen offenbart.

Der Erfindung liegt als technisches Problem die Bereitstellung einer sanitären Umschalteinrichtung der eingangs genannten Art sowie einer damit ausgerüsteten Sanitärarmatur zugrunde, welche den oben erwähnten Stand der Technik verbessern und insbesondere einen einfachen, fließgeräuscharmen Umschaltmechanismus aufweisen.

Die Erfindung löst dieses Problem durch die Bereitstellung einer sanitären Umschalteinrichtung mit den Merkmalen des Anspruchs 1 und einer Sanitärarmatur mit den Merkmalen des Anspruchs 11.

Bei der erfindungsgemäßen sanitären Umschalteinrichtung umfasst das Übertragungsmittel schaltkörperseitig einen Kontaktflächenkörper, der um eine Drehachse drehbeweglich ausgebildet ist und mindestens drei um die Drehachse herum, insbesondere gleichmäßig verteilt, angeordnete Fingeranlageflächen aufweist.

Des Weiteren umfasst das Übertragungsmittel in einer ersten Variante betätigungselementseitig eine Betätigungsfingeranordnung mit mindestens einem ersten und einem zweiten Betätigungsfinger, die zur Anlage gegen jeweils eine der Fingeranlageflächen ausgebildet sind. Der erste Betätigungsfinger ist zur Ausübung einer den Kontaktflächenkörper drehenden Schubkraft auf die anliegende Fingeranlagefläche bei einer mit dem zweiten Betätigungsfinger gemeinsamen Axialbewegung parallel zu der Betätigungsachse in einer ersten Richtung ausgebildet. Der zweite Betätigungsfinger ist zur Ausübung einer den Kontaktflächenkörper drehenden Zugkraft auf die anliegende Fingeranlagefläche bei einer mit dem ersten Betätigungsfinger gemeinsamen Axialbewegung parallel zu einer Betätigungsachse in einer der ersten Richtung entgegengesetzten zweiten Richtung ausgebildet.

Vorteilhafterweise kann der eine, erste oder zweite Betätigungsfinger eine Drehung des Kontaktflächenkörpers aus einer, insbesondere diskreten, Drehstellung heraus in eine Zwischendrehstellung bewirken und der andere, zweite oder erste Betätigungsfinger kann anschließend eine Weiterdrehung des Kontaktflächenkörpers aus der Zwischendrehstellung in eine nächste, insbesondere diskrete, Drehstellung bewirken. Insbesondere können der erste Betätigungsfinger und der zweite Betätigungsfinger parallel zu der Betätigungsachse unterschiedlich lang sein.

Der erste Wasseranschluss kann vorteilhafterweise zur Fluidverbindung mit einer Wasserzuleitung einer Sanitärarmatur bestimmt sein. Die zweiten Wasseranschlüsse können vorteilhafterweise zur Fluidverbindung mit Wasseraustrittsöffnungen der Sanitärarmatur bestimmt sein. Der Schaltkörper kann vorteilhafterweise entsprechend der Mehrzahl der zweiten Wasseranschlüsse eine Mehrzahl diskreter Drehstellungen aufweisen. Zusätzlich kann der Schaltkörper weitere Drehstellungen aufweisen, insbesondere eine, in welcher er einen Fluidfluss zwischen dem ersten Wasseranschluss einerseits und allen zweiten Wasseranschlüssen andererseits freigibt, und/oder eine, in der er einen Fluidfluss zwischen dem ersten Wasseranschluss einerseits und allen zweiten Wasseranschlüssen andererseits absperrt. Mittels Axialbetätigung des Betätigungselements wird eine Drehung des Schaltkörpers und infolge dessen eine Umschaltung zwischen den mehreren zweiten Wasseranschlüssen ausgelöst. Das Betätigungselement kann insbesondere ein vom Benutzer unmittelbar bedienbares Bedienelement sein.

Vorteilhafterweise kann der Kontaktflächenkörper gegenüber dem Schaltkörper drehfest an diesem angeordnet sein; insbesondere kann der Kontaktflächenkörper einstückig mit dem Schaltkörper ausgebildet sein. Des Weiteren können die mindestens drei Fingeranlageflächen des Kontaktflächenkörpers derart ausgerichtet sein, dass sie sich, zumindest in imaginärer Verlängerung, in einer mit der Drehachse zusammenfallenden Schnittlinie schneiden. Vorteilhafterweise kann der mindestens eine Betätigungsfinger gegenüber dem Betätigungselement parallel zu der Betätigungsachse fest an diesem angeordnet sein. Bei zwei zeitlich aufeinander folgenden Drehungen des Kontaktflächenkörpers kann der mindestens eine Betätigungsfinger vorteilhafterweise an jeweils zwei der um die Drehachse aufeinander folgenden Fingeranlageflächen zur Anlage kommen, womit der Kontaktflächenkörper sich immer in der gleichen Drehrichtung um seine Drehachse drehen kann. Somit kann der Schaltkörper seine diskreten Drehstellungen zyklisch nacheinander einnehmen.

Die Umschalteinrichtung ermöglicht ein fließgeräuscharmes Verdrehen des Schaltkörpers. Insbesondere erfordert dieses nicht notwendigerweise ein axiales Bewegen des Schaltkörpers entlang seiner Drehachse. Des Weiteren kann, insbesondere bei Nicht-Parallelität von Drehachse des Kontaktflächenkörpers und Betätigungsachse, das Betätigungselement derart gegenüber dem Schaltkörper angeordnet sein, dass dieses einem axialen Anströmen des Schaltkörpers von dem ersten Wasseranschluss oder den mehreren zweiten Wasseranschlüssen bzw. ein axiales Abströmen von dem Schaltkörper zu dem ersten Wasseranschluss oder den mehreren zweiten Wasseranschlüssen nicht im Weg steht. Außerdem kann das Verdrehen des Schaltkörpers vorteilhafterweise wasserdruckunabhängig sein.

In einer Weiterbildung der Erfindung liegt die Betätigungsachse nicht-parallel, insbesondere senkrecht, zu der Drehachse.

In einer Weiterbildung der Erfindung liegen die Betätigungsachse und die Drehachse in einer gemeinsamen Ebene. Dies kann eine besonders gute Ausübung der Schub- oder Zugkraft auf die anliegende Fingeranlagefläche ermöglichen.

In einer Weiterbildung der Erfindung sind die mindestens drei Fingeranlageflächen zwischen dem Schaltkörper und einer dem Schaltkörper abgewandten Stirnseite des Kontaktflächenkörpers an einem Umfang des Kontaktflächenkörpers angeordnet. Anders formuliert können die mindestens drei Fingeranlageflächen bezüglich der Drehachse des Kontaktflächenkörpers radial angeordnet sein. Ein derart ausgebildeter Kontaktflächenkörper kann einfach zu fertigen sein. Insbesondere kann der Umfang parallel zur Drehachse sein.

In einer Weiterbildung der Erfindung sind die mindestens drei Fingeranlageflächen an der dem Schaltkörper abgewandten Stirnseite des Kontaktflächenkörpers angeordnet. Anders formuliert können die mindestens drei Fingeranlageflächen bezüglich der Drehachse des Kontaktflächenkörpers axial angeordnet sein. Somit kann der Kontaktflächenkörper eine kleine Querschnittsfläche senkrecht zu der Drehachse aufweisen. Dadurch kann der Kontaktflächenkörper für einen Fluidfluss parallel zu seiner Drehachse an ihm vorbei besonders strömungsgünstig sein. Insbesondere kann die Stirnseite senkrecht zur Drehachse sein.

In einer Weiterbildung der Erfindung weist der Kontaktflächenkörper eine sägezahnförmige Kontaktflächenkontur auf, welche die mindestens drei Fingeranlageflächen und Schrägflächen zwischen jeweils zwei der um die Drehachse aufeinander folgenden Fingeranlageflächen umfasst. Dabei bilden die Schrägflächen Aufgleitflächen für den mindestens einen Betätigungsfinger. Entsprechend der Anordnung oder der Ausrichtung der mindestens drei Fingeranlageflächen können die Schrägflächen vorteilhafterweise radial zur Drehachse und/oder parallel zur Drehachse des Kontaktflächenkörpers ansteigend oder absteigend verlaufen. Alternativ oder zusätzlich umfasst der mindestens eine Betätigungsfinger eine Betätigungsanlagefläche zur Anlage gegen die Fingeranlageflächen und eine der Betätigungsanlagefläche abgewandte Schrägfläche als Aufgleitfläche von je einer der Fingeranlageflächen zur nächsten. Somit kann der mindestens eine Betätigungsfinger auf vorteilhafte Weise von einer Fingeranlagefläche zur nächsten geführt werden bzw. gelangen. Der mindestens eine Betätigungsfinger kann zeitlich abwechselnd schieben, gleiten und sich vor bzw. hinter die nächste Fingeranlagefläche zur Anlage an dieser bewegen oder ziehen, gleiten und sich vor bzw. hinter die nächste Fingeranlagefläche zur Anlage an dieser bewegen. Insbesondere kann sich der mindestens eine Betätigungsfinger dabei radial und/oder parallel zur Drehachse des Kontaktflächenkörpers bewegen.

In einer Weiterbildung der Erfindung ist der mindestens eine Betätigungsfinger biegeelastisch an dem Betätigungselement angeordnet. Dies kann auf vorteilhafte Weise gewährleisten, dass der mindestens eine Betätigungsfinger permanent in Richtung Kontaktflächenkörper kraftbeaufschlagt sein kann oder sogar permanent an diesem anliegen kann. Ist mindestens eine Schrägfläche vorhanden, kann der mindestens eine Betätigungsfinger aufgrund der Biegeelastizität zunächst aufgleiten und sich anschließend vor bzw. hinter die nächste Fingeranlagefläche zur Anlage an dieser bewegen bzw. schnappen. Insbesondere kann der mindestens eine Betätigungsfinger in Form einer Stabfeder ausgebildet sein.

In einer Weiterbildung der Erfindung umfasst die sanitäre Umschalteinrichtung ein rohrförmiges Gehäuse, wobei das Betätigungselement an einem Umfang des Gehäuses und der Schaltkörper sowie das Übertragungsmittel in dem Gehäuse angeordnet sind. Dabei liegt eine Drehachse des Schaltkörpers parallel, insbesondere koaxial, zu einer Längsachse des Gehäuses. Somit kann Wasser strömungsgünstig den Schaltkörper passierend durch das Gehäuse fließen. Eine Betätigungsachse des Betätigungselements kann vorteilhafterweise senkrecht zur Gehäuselängsachse liegen. Des Weiteren kann der erste Wasseranschluss an einer ersten Stirnseite des Gehäuses angeordnet sein. Alternativ oder zusätzlich können die mehreren zweiten Wasseranschlüsse an einer der ersten Stirnseite gegenüberliegenden zweiten Stirnseite des Gehäuses angeordnet sein, insbesondere um die Drehachse des Schaltkörpers oder die Längsachse des Gehäuses herum, bevorzugt entsprechend der Mehrzahl der diskreten Drehstellungen des Schaltkörpers verteilt. Somit kann Wasser besonders strömungsgünstig ohne größere, insbesondere rechtwinklige, Richtungsänderungen durch das Gehäuse fließen. Vorteilhafterweise kann das rohrförmige Gehäuse eine kreisrunde Querschnittsform und bei Bedarf zusätzlich ein Gewinde am ersten oder zweiten stirnseitigen Ende aufweisen. Mittels des Gewindes kann das rohrförmige Gehäuse in ein Gegengewinde z.B. der Sanitärarmatur eingeschraubt werden.

In einer Weiterbildung der Erfindung umfasst das Betätigungselement eine Drucktaste, die zwischen zwei axialen Endpositionen beweglich ist, und die sanitäre Umschalteinrichtung weist eine Feder auf, welche die Drucktaste in eine der beiden Endpositionen beaufschlagt. Somit kann die Umschalteinrichtung, insbesondere immer in der gleichen Weise, durch Eindrücken und Freigeben bzw. Loslassen der Drucktaste betätigt werden. Die Endpositionen können jeweils durch Anschläge für die Drucktaste definiert sein. Vorteilhafterweise kann der mindestens eine Betätigungsfinger durch die Feder mitbeaufschlagt werden, wodurch er von einer Fingeranlagefläche zur nächsten bewegt werden kann.

In einer Weiterbildung der Erfindung umfasst die sanitäre Umschalteinrichtung ein Gehäuse und einen starren Stift, der an dem Betätigungselement fest angeordnet ist und den Kontaktflächenkörper entlang seiner Drehachse in einer Richtung in dem Gehäuse sichert.

In einer Weiterbildung der Erfindung umfasst der Schaltkörper eine Steuerscheibe mit mindestens einer Steueröffnung. Vorteilhafterweise kann die sanitäre Umschalteinrichtung einen, insbesondere drehfesten, Wasseranschlusskörper aufweisen, der Wasseranschlussöffnungen für die mehreren zweiten Wasseranschlüsse umfasst, wobei sich die Steueröffnung bzw. die Wasseranschlussöffnungen über aufeinander abgestimmte Winkelbereiche erstrecken können. Die Steuerscheibe kann ein keramisches und/oder duroplastisches Material umfassen. Des Weiteren kann die sanitäre Umschalteinrichtung eine Rückdrehsicherung gegen Rückdrehen entgegen der zyklischen Drehrichtung und/oder eine Verschleißverringerungseinrichtung für die Steuerscheibe umfassen. Insbesondere kann die Steuerscheibe eine, insbesondere axial angeordnete, sägezahnförmige Schaltkörper-Flächenkontur mit mehreren Schaltkörper-Schrägflächen umfassen, z.B. entsprechend der Mehrzahl der diskreten Drehstellungen. Entsprechend kann der Wasseranschlusskörper eine, insbesondere axial angeordnete, sägezahnförmige Anschlusskörper-Flächenkontur mit mehreren Anschlusskörper-Schrägflächen umfassen. Dabei können die Anschlusskörper-Schrägflächen Aufgleitflächen für die Schaltkörper-Schrägflächen bilden. Wenn sich der Schaltkörper bzw. die Steuerscheibe in einer diskreten Drehstellung befinden, kann die Steuerscheibe mit ihrer Flächenkontur plan oder in vollflächigem Kontakt an dem Wasseranschlusskörper mit seiner Flächenkontur anliegen. Bei Drehung des Schaltkörpers bzw. der Steuerscheibe von einer diskreten Drehstellung in die nächste können die Schaltkörper-Schrägflächen an den Anschlusskörper-Schrägflächen aufgleiten, wobei sie mit weniger Fläche in Kontakt sein können, wodurch Reibung und Abnutzung der Steuerscheibe verringert werden. Dabei kann sich die Steuerscheibe parallel zur Drehachse des Schaltkörpers bewegen. Die Schaltkörper-Flächenkontur und die Anschlusskörper-Flächenkontur können durch ihre gegenseitige Wechselwirkung ein Drehen des Schaltkörpers bzw. der Steuerscheibe entgegen der zyklischen Drehrichtung verhindern.

Die erfindungsgemäße Sanitärarmatur weist eine Wasserzuleitung, mehrere Wasseraustrittsöffnungen und die erfindungsgemäße sanitäre Umschalteinrichtung auf. Dabei steht die Wasserzuleitung mit dem ersten Wasseranschluss in Fluidverbindung und jede der mehreren Wasseraustrittsöffnungen steht jeweils mit einem der mehreren zweiten Wasseranschlüsse in Fluidverbindung. Mittels der Umschalteinrichtung kann zwischen den mehreren Wasseraustrittsöffnungen umgeschaltet werden. Die Sanitärarmatur mit den mehreren Wasseraustrittsöffnungen kann z.B. einen Wannenmischer mit einer Wannenaustrittsöffnung und einer Brausenaustrittsöffnung oder eine Brause, insbesondere eine Kopf- und/oder Handbrause, mit mehreren Strahlaustrittsöffnungen für verschiedene Strahlarten umfassen.

Vorteilhafte Ausführungsformen der Erfindung sind in den Zeichnungen dargestellt und werden nachfolgend beschrieben. Hierbei zeigen:
- Fig. 1: eine Perspektivansicht einer sanitären Umschalteinrichtung,
- Fig. 2: eine Seitenansicht der Umschalteinrichtung der Fig. 1 ohne deren Gehäuse,
- Fig. 3: eine weitere Seitenansicht der Umschalteinrichtung der Fig. 1 ohne deren Gehäuse,
- Fig. 4: eine Frontansicht der Umschalteinrichtung der Fig. 1 ohne deren Gehäuse,
- Fig. 5: eine Längsschnittansicht der Umschalteinrichtung der Fig. 1,
- Fig. 6: eine Perspektivansicht einer weiteren sanitären Umschalteinrichtung,
- Fig. 7: eine Perspektivansicht der Umschalteinrichtung der Fig. 6 ohne deren Gehäuse,
- Fig. 8: eine Frontansicht der Umschalteinrichtung der Fig. 6 ohne deren Gehäuse,
- Fig. 9: eine Längsschnittansicht der Umschalteinrichtung der Fig. 6,
- Fig. 10: eine Querschnittansicht der Umschalteinrichtung der Fig. 6,
- Fig. 11: eine Perspektivansicht einer weiteren sanitären Umschalteinrichtung,
- Fig. 12: eine Seitenansicht der Umschalteinrichtung der Fig. 11 ohne deren Gehäuse,
- Fig. 13: eine weitere Seitenansicht der Umschalteinrichtung der Fig. 11 ohne deren Gehäuse,
- Fig. 14: eine Frontansicht der Umschalteinrichtung der Fig. 11 ohne deren Gehäuse,
- Fig. 15: eine Längsschnittansicht der Umschalteinrichtung der Fig. 11,
- Fig. 16: eine Perspektivansicht einer weiteren sanitären Umschalteinrichtung,
- Fig. 17: eine Seitenansicht der Umschalteinrichtung der Fig. 16 ohne deren Gehäuse,
- Fig. 18: eine Frontansicht der Umschalteinrichtung der Fig. 16 ohne deren Gehäuse und
- Fig. 19: eine Längsschnittansicht der Umschalteinrichtung der Fig. 16.

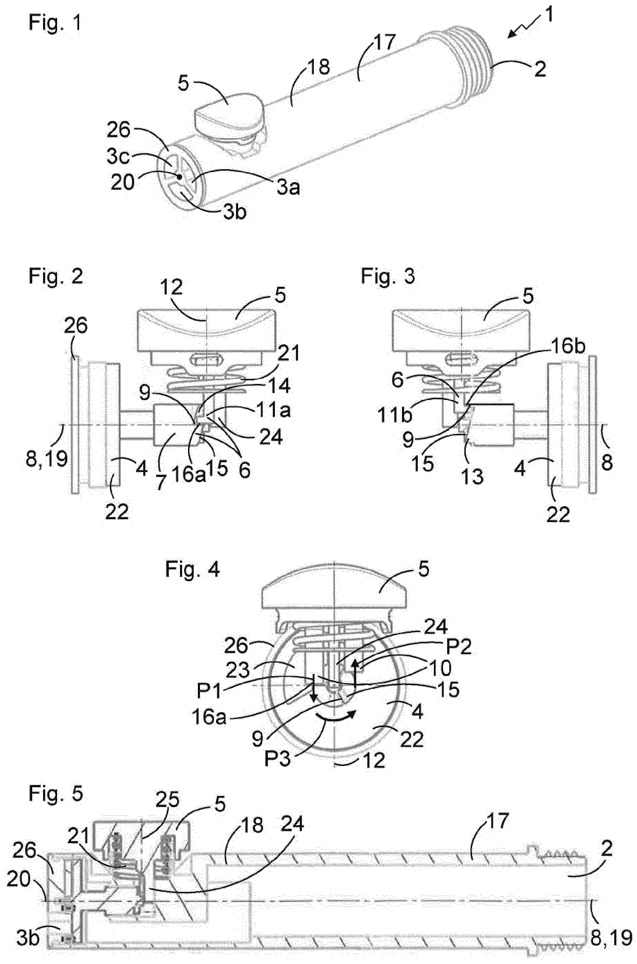

Eine in den Fig. 1 bis 5 gezeigte sanitäre Umschalteinrichtung 1 umfasst einen ersten Wasseranschluss 2, mehrere zweite Wasseranschlüsse 3a, 3b, 3c ein axial bewegliches Betätigungselement 5 in Form einer Drucktaste. Und ein rohrförmiges Gehäuse 17 mit einer kreisrunden Querschnittsform. Der erste Wasseranschluss 2 ist an einer ersten Stirnseite des Gehäuses 17 angeordnet. Die mehreren zweiten Wasseranschlüsse 3a, 3b, 3c sind an einer der ersten Stirnseite gegenüberliegenden zweiten Stirnseite des Gehäuses 17 angeordnet, insbesondere um eine Längsachse 20 des Gehäuses 17 gleichmäßig herum verteilt. Im Detail weist die sanitäre Umschalteinrichtung 1 einen drehfesten Wasseranschlusskörper 26 auf, an dem die mehreren, in diesem Beispiel drei, zweiten Wasseranschlüsse 3a, 3b, 3c ausgebildet sind. Das Betätigungselement 5 ist an einem Umfang 18 des Gehäuses 17 angeordnet. An der ersten Stirnseite weist das Gehäuse 17 ein Gewinde auf, das in ein Gegengewinde z.B. einer hier nicht gezeigten Sanitärarmatur eingeschraubt werden kann.

In dem Gehäuse 17 sind ein drehbeweglicher Schaltkörper 4 und ein Übertragungsmittel 6 angeordnet, wie in den Fig. 2 bis 5 zu erkennen. Der drehbewegliche Schaltkörper 4 ist zur drehstellungsabhängigen Freigabe oder Absperrung eines Fluidflusses zwischen dem ersten Wasseranschluss 2 einerseits und den mehreren zweiten Wasseranschlüssen 3a, 3b, 3c andererseits ausgebildet. Im Detail umfasst der Schaltkörper 4 eine Steuerscheibe 22 mit einer Steueröffnung 23, wobei die Steuerscheibe 22 an dem Wasseranschlusskörper 26 anliegt. Der Schaltkörper 4 weist entsprechend der Mehrzahl der zweiten Wasseranschlüsse 3a, 3b, 3c drei diskrete Drehstellungen auf, wobei die Steueröffnung 23 in jeder der Drehstellungen einen der drei zweiten Wasseranschlüsse 3a, 3b, 3c freigibt und die Steuerscheibe 22 die übrigen zweiten Wasseranschlüsse 3a, 3b, 3c absperrt.

Das Übertragungsmittel 6 überträgt die Axialbewegung des Betätigungselements 5 in die Drehbewegung des Schaltkörpers 4. Somit kann mittels Axialbetätigung des Betätigungselements 5 eine Drehung des Schaltkörpers 4 und infolgedessen eine Umschaltung zwischen den mehreren zweiten Wasseranschlüssen 3a, 3b, 3c ausgelöst werden. Das Betätigungselement 5 kann insbesondere ein vom Benutzer unmittelbar bedienbares Element sein.

Das Übertragungsmittel 6 umfasst schaltkörperseitig einen Kontaktflächenkörper 7, der um seine Drehachse 8 drehbeweglich ausgebildet ist und drei um die Drehachse 8 herum, insbesondere gleichmäßig verteilt, angeordnete Fingeranlageflächen 9 aufweist. Im Detail weist der Kontaktflächenkörper 7 eine sägezahnförmige Kontaktflächenkontur 14 auf, welche die drei Fingeranlageflächen 9 umfasst. Der Kontaktflächenkörper 7 ist gegenüber dem Schaltkörper 4 drehfest an diesem angeordnet, indem sie in diesem Beispiel einstückig miteinander ausgebildet sind. Die drei Fingeranlageflächen 9 sind derart ausgerichtet, dass sie sich in imaginärer Verlängerung in einer mit der Drehachse 8 zusammenfallenden Schnittlinie schneiden. Des Weiteren sind die drei Fingeranlageflächen 9 an einer dem Schaltkörper 4 abgewandten Stirnseite 13 des Kontaktflächenkörpers 7 angeordnet bzw. bezüglich der Drehachse 8 des Kontaktflächenkörpers 7 axial angeordnet. Die Stirnseite 13 ist senkrecht zur Drehachse 8.

Betätigungselementseitig umfasst das Übertragungsmittel 6 eine Betätigungsfingeranordnung 10 mit einem ersten Betätigungsfinger 11a und einem zweiten Betätigungsfinger 11b. Der erste Betätigungsfinger 11a und der zweite Betätigungsfinger 11b sind jeweils parallel zu einer Betätigungsachse 12 der Betätigungsfingeranordnung 10 beweglich und zur Anlage gegen jeweils eine der Fingeranlageflächen 9 ausgebildet. Die Betätigungsachse 12 liegt nicht-parallel, insbesondere senkrecht, zu der Drehachse 8 mit dieser in einer gemeinsamen Ebene. Im Detail umfasst der erste Betätigungsfinger eine in Fig. 2 unterseitige Betätigungsanlagefläche 16a zur Anlage gegen die Fingeranlageflächen 9 und der zweite Betätigungsfinger 11b umfasst eine in Fig. 3 oberseitige Betätigungsanlagefläche 16b zur Anlage gegen die Fingeranlageflächen 9. Der erste Betätigungsfinger 11a und der zweite Betätigungsfinger 11b sind gegenüber dem Betätigungselement 5 parallel zu der Betätigungsachse 12 fest an diesem angeordnet.

Der erste Betätigungsfinger 11a ist zur Ausübung einer den Kontaktflächenkörper 7 drehenden Schubkraft auf die anliegende Fingeranlagefläche 9 bei einer mit dem zweiten Betätigungsfinger 11b gemeinsamen Axialbewegung parallel zu der Betätigungsachse 12 in einer ersten Richtung, in den Fig. 2 bis 5 nach unten wie durch den Pfeil P1 angezeigt, ausgebildet. Der zweite Betätigungsfinger 11b ist zur Ausübung einer den Kontaktflächenkörper 7 drehenden Zugkraft auf die anliegende Fingeranlagefläche 9 bei einer mit dem ersten Betätigungsfinger 11a gemeinsamen Axialbewegung parallel zu der Betätigungsachse 12 in einer der ersten Richtung entgegengesetzten zweiten Richtung, in den Fig. 2 bis 5 nach oben wie durch den Pfeil P2 angezeigt, ausgebildet.

Bei einer Bewegung des Betätigungselements 5 in die erste Richtung dreht der erste Betätigungsfinger 11a den Kontaktflächenkörper 7 bzw. den Schaltkörper 4 aus einer der diskreten Drehstellungen heraus in eine Zwischendrehstellung, in Fig. 4 gegen den Uhrzeigersinn wie durch den Pfeil P3 angezeigt. Bei einer anschließenden Bewegung des Betätigungselements 5 in die zweite Richtung dreht der zweite Betätigungsfinger 11b den Kontaktflächenkörper 7 bzw. den Schaltkörper 4 aus der Zwischendrehstellung in die nächste diskrete Drehstellung weiter. Beim nächsten Mal bzw. bei zwei zeitlich aufeinanderfolgenden Drehungen des Kontaktflächenkörpers 7 kommen der erste Betätigungsfinger 11a und der zweite Betätigungsfinger 11b jeweils nacheinander an zwei in Drehrichtung aufeinanderfolgenden Fingeranlageflächen 9 zur Anlage. Damit wird der Kontaktflächenkörper 7 immer in der gleichen Drehrichtung um seine Drehachse 8 gedreht und der Schaltkörper 4 nimmt seine diskreten Drehstellungen zyklisch nacheinander ein. Zusätzlich umfasst die sanitäre Umschalteinrichtung 1 eine Rückdrehsicherung gegen Rückdrehen entgegen der zyklischen Drehrichtung, insbesondere aus den diskreten Drehstellungen heraus, für den Kontaktflächenkörper 7 und damit auch für den Schaltkörper 4. Die Rückdrehsicherung wird durch die Fingeranlageflächen 9 und die Betätigungsfinger 11a, 11b gebildet.

Die sägezahnförmige Kontaktflächenkontur 14 umfasst neben den drei Fingeranlageflächen 9 drei Schrägflächen 15 zwischen jeweils zwei der um die Drehachse 8 aufeinanderfolgenden Fingeranlageflächen 9. Die Schrägflächen 15 bilden Aufgleitflächen für den ersten Betätigungsfinger 11a bzw. für den zweiten Betätigungsfinger 11b. Entsprechend der Anordnung oder der Ausrichtung der Fingeranlageflächen 9 verlaufen die Schrägflächen 15 parallel zur Drehachse 8 des Kontaktflächenkörpers 7 ansteigend.

Die beiden Betätigungsfinger 11a, 11b, die fest an dem Betätigungselement 5 angeordnet sind, sind biegeelastisch ausgebildet, insbesondere jeweils in Form einer Stabfeder. Beide Betätigungsfinger 11a, 11b sind aufgrund ihrer Biegeelastizität jeweils permanent in Richtung Kontaktflächenkörper 7 kraftbeaufschlagt und liegen somit permanent an diesem an. Jeder Betätigungsfinger 11a, 11b kann jeweils von einer Fingeranlagefläche 9 ausgehend an einer der Schrägflächen 15 zunächst aufgleiten und sich anschließend vor bzw. hinter die nächste Fingeranlagefläche 9 zur Anlage an dieser bewegen bzw. schnappen. Zumindest beim Aufgleiten und Schnappen bewegen sich die Betätigungsfinger 11a, 11b jeweils parallel zur Drehachse 8 des Kontaktflächenkörpers 7. Somit kann der erste Betätigungsfinger 11a zeitlich abwechselnd schieben und gleiten und der zweite Betätigungsfinger 11b kann zeitlich abwechselnd ziehen und gleiten. Insbesondere gleitet der zweite Betätigungsfinger 11b während des Schiebens des ersten Betätigungsfingers 11a und der erste Betätigungsfinger 11 gleitet während des Ziehens des zweiten Betätigungsfingers 11b.

Das Betätigungselement 5 ist zwischen zwei axialen Endpositionen entlang seiner Betätigungsachse 25 beweglich, die senkrecht zur Gehäuselängsachse 20 liegt, wie in Fig. 5 zu erkennen. Die eine, in Fig. 5 gezeigte obere Endposition ist dadurch definiert, dass das Betätigungselement in das Gehäuse eingeschoben ist und mittels einer Rastverbindung gegen Lösen von diesem gesichert ist. Die andere Endposition ist durch einen in Fig. 5 unteren Anschlag am Gehäuse 17 definiert. Die sanitäre Umschalteinrichtung 1 weist eine Feder 21 auf, welche das Betätigungselement 5 in die in Fig. 5 gezeigte obere Endposition beaufschlagt. Die Umschalteinrichtung 1 wird immer in der gleichen Weise durch Eindrücken und Freigeben bzw. Loslassen des Betätigungselements 5 betätigt.

Im Detail beaufschlagt die Feder 21 die beiden Betätigungsfinger 11a, 11b über das Betätigungselement 5 mit. Dadurch werden die beiden Betätigungsfinger 11a, 11b nach einer gemeinsamen Axialbewegung in der ersten Richtung gemeinsam in die zweite Richtung bewegt. Die Betätigungsfingeranordnung 10 und der Kontaktflächenkörper 7 mit den Fingeranlageflächen 9 sind derart dimensioniert, dass der zweite Betätigungsfinger 11b nach der gemeinsamen Axialbewegung in der ersten Richtung an einer der Fingeranlageflächen 9 zur Anlage zum Ausüben der Zugkraft gelangen kann und der erste Betätigungsfinger 11a nach der gemeinsamen Axialbewegung in der zweiten Richtung an einer der Fingeranlageflächen 9 zur Anlage zum Ausüben der Schubkraft gelangen kann. Insbesondere sind in der gezeigten Ausführungsform die beiden Betätigungsfinger 11a, 11b parallel zu der Betätigungsachse 12 unterschiedlich lang.

Eine Drehachse 19 des Schaltkörpers 4, die in der Ausführungsform mit der Drehachse 8 des Kontaktflächenkörpers 7 zusammenfällt, liegt parallel, insbesondere koaxial zu der Längsachse 20 des Gehäuses 17. Des Weiteren umfasst die sanitäre Umschalteinrichtung 1 einen starren Stift 24, der an dem Betätigungselement 5 fest angeordnet ist und den Kontaktflächenkörper 7 bzw. den Schaltkörper 4 gegen Wegbewegen entlang der Drehachse 8, 19 in einer Richtung in dem Gehäuse 17 sichert. In einer entgegengesetzten Richtung sichert der Wasseranschlusskörper 26 gegen dieses Wegbewegen. In Radialrichtung senkrecht zu seiner Drehachse 19 ist der Schaltkörper 4 durch das Gehäuse 17 bzw. den Wasseranschlusskörper 26 festgelegt und der Kontaktflächenkörper 7 ist in Radialrichtung senkrecht zu seiner Drehachse 8 durch eine Aufnahme des Gehäuses 17 festgelegt.

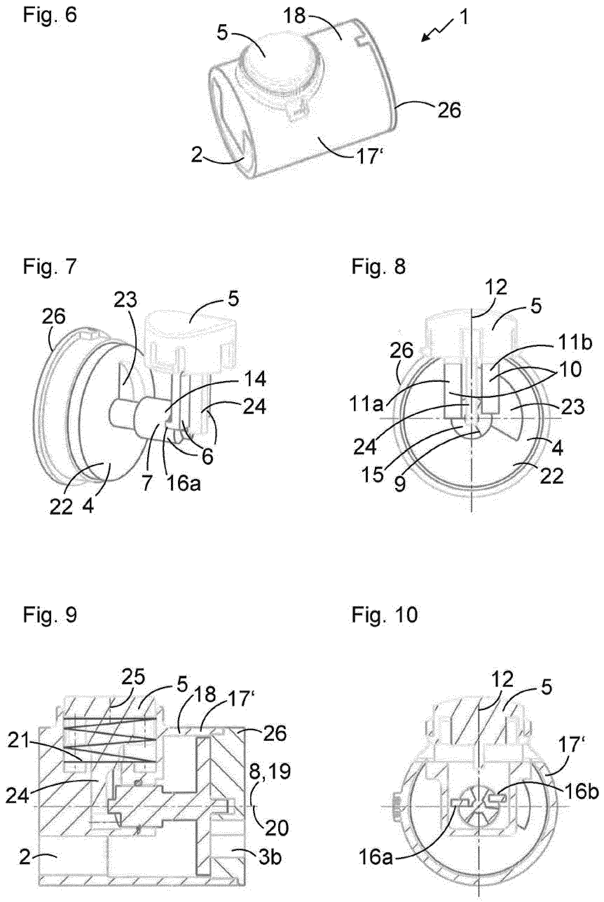

Die Fig. 6 bis 10 zeigen eine weitere erfindungsgemäße sanitäre Umschalteinrichtung 1 als Variante der Umschalteinrichtung der Fig. 1 bis 5, wobei zum leichten Verständnis nicht nur identische, sondern auch funktionell äquivalente Elemente mit den gleichen Bezugszeichen versehen sind wie in der oben erläuterten Ausführungsform, auf deren Beschreibung insoweit verwiesen werden kann. Im Unterschied zu dem Gehäuse 17 der Ausführungsform der Fig. 1 bis 5 weist hier ein Gehäuse 17' kein Gewinde auf. Des Weiteren endet das Gehäuse 17' stirnseitig nach der Aufnahme für den Kontaktflächenkörper 7 bzw. das Betätigungselement 5.

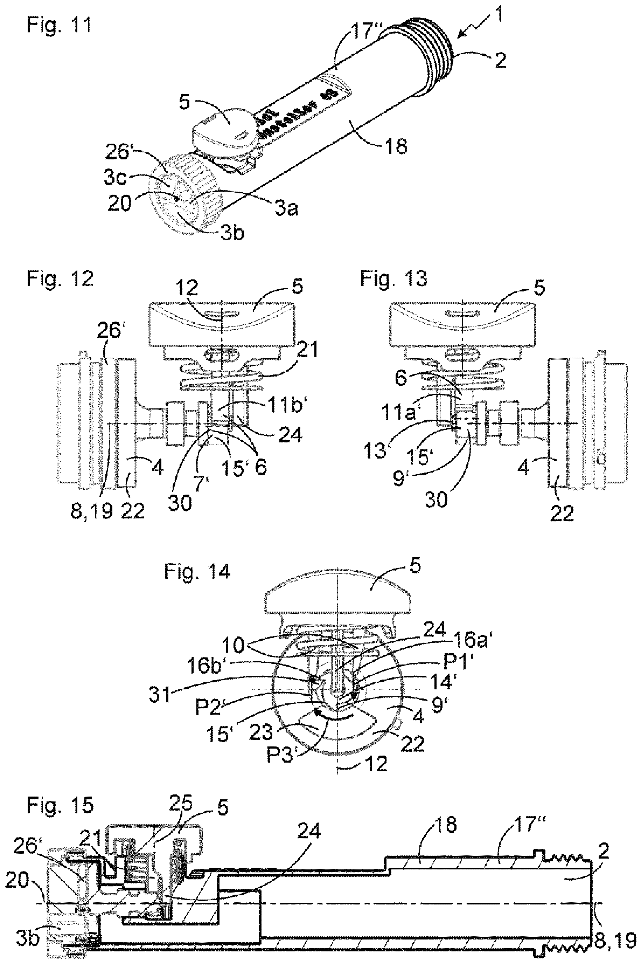

Die Fig. 11 bis 15 zeigen wiederum eine weitere erfindungsgemäße sanitäre Umschalteinrichtung 1, wobei funktionell äquivalente Elemente wiederum mit den gleichen Bezugszeichen versehen sind wie die oben erläuterten Ausführungsformen, auf deren Beschreibung insoweit verwiesen werden kann. Im Unterschied zu der Ausführungsform der Fig. 1 bis 5 weisen hier ein Gehäuse 17" und ein Wasseranschlusskörper 26' jeweils eine andere Gestalt auf. Des Weiteren sind im Unterscheid zu dem Kontaktflächenkörper 7 der Ausführungsform der Fig. 1 bis 5 oder der Fig. 6 bis 10 hier bei einem Kontaktflächenkörper 7' drei Fingeranlageflächen 9' zwischen dem Schaltkörper 4 und einer dem Schaltkörper abgewandten Stirnseite 13' des Kontaktflächenkörpers 7' an einem Umfang 30 des Kontaktflächenkörpers 7' angeordnet bzw. bezüglich der Drehachse 8 des Kontaktflächenkörpers 7' radial angeordnet. Der Umfang 30 ist parallel zur Drehachse 8. Entsprechend umfasst ein erster Betätigungsfinger 11a' eine in Fig. 14 unterseitige Betätigungsanlagefläche 16a' zur Anlage gegen die Fingeranlageflächen 9' und ein zweiter Betätigungsfinger 11b' umfasst eine in Fig. 14 oberseitige Betätigungsanlagefläche 16b' zur Anlage gegen die Fingeranlageflächen 9'.

Der erste Betätigungsfinger 11a' ist zur Ausübung einer den Kontaktflächenkörper 7' drehenden Schubkraft auf die anliegende Fingeranlagefläche 9' bei einer mit dem zweiten Betätigungsfinger 11b' gemeinsamen Axialbewegung parallel zu der Betätigungsachse 12 in einer ersten Richtung, in den Fig. 12 bis 15 nach unten wie durch den Pfeil P1' angezeigt, ausgebildet. Der zweite Betätigungsfinger 11b' ist zur Ausübung einer den Kontaktflächenkörper 7' drehenden Zugkraft auf die anliegende Fingeranlagefläche 9' bei einer mit dem ersten Betätigungsfinger 11a' gemeinsamen Axialbewegung parallel zu der Betätigungsachse 12 in einer der ersten Richtung entgegengesetzten zweiten Richtung, in den Fig. 12 bis 15 nach oben wie durch den Pfeil P2' angezeigt, ausgebildet. Bei einer Bewegung des Betätigungselements 5 in die erste Richtung dreht der erste Betätigungsfinger 11a' den Kontaktflächenkörper 7' bzw. den Schaltkörper 4, in Fig. 14 im Uhrzeigersinn wie durch den Pfeil P3' angezeigt. Bei einer Bewegung des Betätigungselements 5 in die zweite Richtung dreht der zweite Betätigungsfinger 11b' den Kontaktflächenkörper 7' bzw. den Schaltkörper 4.

Wie der Kontaktflächenkörper der Ausführungsform der Fig. 1 bis 5 oder der Fig. 6 bis 10 weist der Kontaktflächenkörper 7' eine sägezahnförmige Kontaktflächenkontur 14' auf, welche neben den drei Fingeranlageflächen 9' drei Schrägflächen 15' zwischen jeweils zwei der um die Drehachse 8 aufeinanderfolgenden Fingeranlageflächen 9' umfasst, wobei die Schrägflächen 15' entsprechend der Anordnung oder der Ausrichtung der Fingeranlageflächen 9' radial zur Drehachse 8 des Kontaktflächenkörpers 7' ansteigend verlaufen. Zusätzlich umfasst der zweite Betätigungsfinger 11b' eine der Betätigungsanlagefläche 16b' abgewandte, insbesondere radial zur Drehachse 8 ansteigend verlaufende, Schrägfläche 31 als Aufgleitfläche von je einer der Fingeranlageflächen 9' zur nächsten. Jeder Betätigungsfinger 11a', 11b' kann jeweils von einer Fingeranlagefläche 9' ausgehend zunächst aufgleiten und sich anschließend vor bzw. hinter die nächste Fingeranlagefläche 9' zur Anlage an dieser bewegen bzw. schnappen. Zumindest beim Aufgleiten und Schnappen bewegen sich die Betätigungsfinger 11a', 11b' jeweils radial zur Drehachse 8 des Kontaktflächenkörpers 7'.

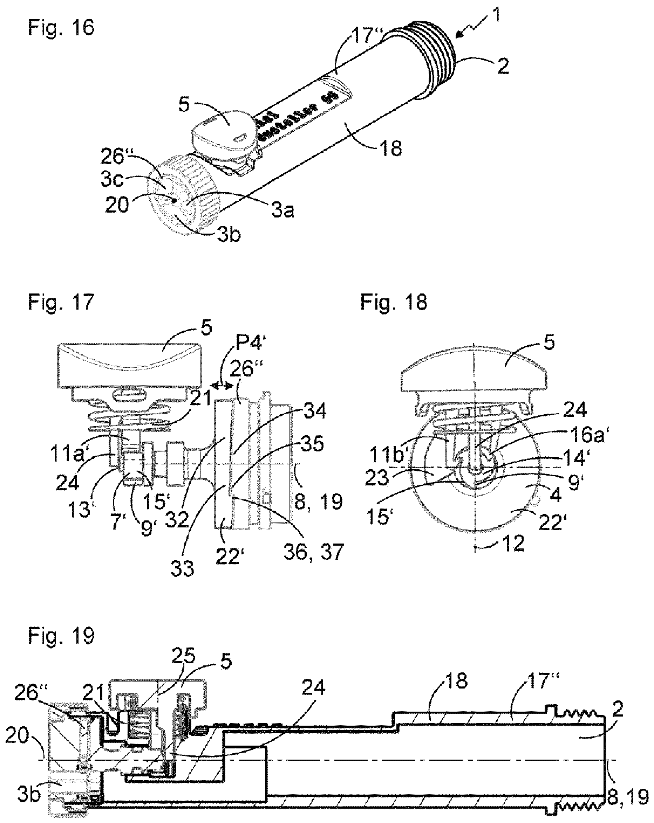

Die Fig. 16 bis 19 zeigen eine weitere erfindungsgemäße sanitäre Umschalteinrichtung 1 als Variante der Umschalteinrichtung der Fig. 11 bis 16, wobei zum leichten Verständnis nicht nur identische, sondern auch funktionell äquivalente Elemente mit den gleichen Bezugszeichen versehen sind wie in den oben erläuterten Ausführungsformen, auf deren Beschreibung insoweit verwiesen werden kann. Im Unterschied zur Steuerscheibe 22 der vorigen Ausführungsformen umfasst hier eine Steuerscheibe 22' eine, insbesondere axial angeordnete, sägezahnförmige Schaltkörper-Flächenkontur 32 mit drei Schaltkörper-Schrägflächen 33 entsprechend der Mehrzahl der diskreten Drehstellungen. Die Schaltkörper-Schrägflächen 33 sind um die Drehachse 19 des Schaltkörpers 4 herum, insbesondere gleichmäßig verteilt, angeordnet und verlaufen parallel zur Drehachse 19 ansteigend.

Entsprechend umfasst ein Wasseranschlusskörper 26" eine, insbesondere axial angeordnete, sägezahnförmige Anschlusskörper-Flächenkontur 34 mit drei Anschlusskörper-Schrägflächen 35. Die Anschlusskörper-Schrägflächen 35 sind um die Drehachse 19 des Schaltkörpers 4 oder um die Längsachse 20 des Gehäuses 17" herum, insbesondere gleichmäßig verteilt, angeordnet und verlaufen parallel zur Drehachse 19 bzw. zur Drehachse 20 ansteigend. Die Anschlusskörper-Schrägflächen 35 bilden Aufgleitflächen für die Schaltkörper-Schrägflächen 33.

Der Stift 24 ist in dieser Ausführungsform biegeelastisch ausgebildet und kraftbeaufschlagt den Kontaktflächenkörper 7 und den Schaltkörper 4, zumindest während eines Aufgleitens der Steuerscheibe 22', und sichert diese gegen Wegbewegen entlang der Drehachse 8, 19 in einer Richtung in dem Gehäuse 17.

Wenn sich der Schaltkörper 4 bzw. die Steuerscheibe 22' in einer diskreten Drehstellung befinden, wie in Fig. 17 gezeigt, liegt die Steuerscheibe 22' mit ihrer Flächenkontur 32 plan oder in vollflächigem Kontakt an dem Wasseranschlusskörper 26" mit seiner Flächenkontur 34 an. Bei Drehung der Steuerscheibe 22' von einer diskreten Drehstellung in die nächste gleiten die Schaltkörper-Schrägflächen 33 an den Anschlusskörper-Schrägflächen 35 auf, wobei sie mit weniger Fläche in Kontakt sind. Dabei bewegt sich die Steuerscheibe 22' parallel zur Drehachse 8 des Schaltkörpers 4, in Fig. 17 durch den Pfeil P4' angezeigt. Aufgrund der Biegeelastizität des Stifts 24 kann sich die Steuerscheibe 22' während des Aufgleitens parallel zur Drehachse 8 des Schaltkörpers 4 bewegen. Am Ende der Drehung bewegt sich die Steuerscheibe 22' in entgegengesetzter Richtung zur Drehachse 8 des Schaltkörpers 4 und liegt in ihrer nächsten diskreten Drehstellung mit ihrer Flächenkontur 32 wieder in vollflächigem Kontakt an der Flächenkontur 34 des Wasseranschlusskörpers 26" an. Somit umfasst die sanitäre Umschalteinrichtung 1 der Ausführungsform der Fig. 16 bis 19 eine Verschleißverringerungseinrichtung für die Steuerscheibe 22' und für den Wasseranschlusskörper 26".

Zusätzlich umfasst die sanitäre Umschalteinrichtung 1 eine Rückdrehsicherung gegen Rückdrehen entgegen der zyklischen Drehrichtung, insbesondere aus den diskreten Drehstellungen heraus, für den Schaltkörper 4 und dessen Steuerscheibe 22'. Die sägezahnförmigen Flächenkonturen 32, 34 umfassen neben den Schrägflächen 32, 35 jeweils drei Flanken 36, 37 zwischen jeweils zwei der um die jeweilige Drehachse aufeinanderfolgenden Schrägflächen 32, 35. Die Rückdrehsicherung wird durch die Flanken 36, 37 der sägezahnförmigen Flächenkonturen 32, 34 gebildet.

In einer der gezeigten Ausführungsformen weist das rohrförmige Gehäuse ein Gewinde am ersten stirnseitigen Ende auf. Alternativ oder zusätzlich kann das rohrförmige Gehäuse ein Gewinde am zweiten stirnseitigen Ende aufweisen. Des Weiteren weisen in den gezeigten Ausführungsformen die rohrförmigen Gehäuse jeweils eine kreisrunde Querschnittsform auf. Alternativ können diese auch eine andere Querschnittsform aufweisen, insbesondere eine eckige. Außerdem ist in den gezeigten Beispielen der erste Wasseranschluss an der ersten Stirnseite des Gehäuses angeordnet und die mehreren zweiten Wasseranschlüsse sind an der zweiten Stirnseite des Gehäuses angeordnet. Alternativ kann der erste Wasseranschluss woanders, insbesondere am Umfang, angeordnet sein und/oder die mehreren zweiten Wasseranschlüsse können woanders, insbesondere am Umfang, angeordnet sein.

In den gezeigten Ausführungsformen weist der Kontaktflächenkörper drei Fingeranlageflächen auf. Alternativ kann der Kontaktflächenkörper mehr als drei, z.B. vier, fünf, sechs, usw., Fingeranlageflächen aufweisen. Des Weiteren weist in den gezeigten Ausführungsformen die Betätigungsfingeranordnung einen ersten Betätigungsfinger und einen zweiten Betätigungsfinger auf. Alternativ kann die Betätigungsfingeranordnung mehr als zwei oder nur einen einzigen Betätigungsfinger aufweisen, der zur Ausübung einer den Kontaktflächenkörper drehenden Schub- oder Zugkraft auf die anliegende Fingeranlagefläche ausgebildet sein kann.

Die Erfindung umfasst zudem eine nicht gezeigte Sanitärarmatur, die eine Wasserzuleitung, mehrere Wasseraustrittsöffnungen und eine der erwähnten sanitären Umschalteinrichtungen aufweist. Dabei kann die Wasserzuleitung mit dem ersten Wasseranschluss in Fluidverbindung und jede der mehreren Wasseraustrittsöffnungen jeweils mit einem der mehreren zweiten Wasseranschlüsse in Fluidverbindung stehen. Mittels der sanitären Umschalteinrichtung kann dann zwischen den mehreren Wasseraustrittsöffnungen umgeschaltet werden.

Wie die gezeigten und oben erläuterten Ausführungsformen deutlich machen, stellt die Erfindung eine vorteilhafte sanitäre Umschalteinrichtung sowie eine Sanitärarmatur mit einer solchen sanitären Umschalteinrichtung zur Verfügung, wobei die sanitäre Umschalteinrichtung den Stand der Technik weiter verbessert und insbesondere einen einfachen, fließgeräuscharmen Umschaltmechanismus aufweist.

## Patentansprüche

1. Sanitäre Umschalteinrichtung mit
- einem ersten Wasseranschluss (2),
- mehreren zweiten Wasseranschlüssen (3a, 3b, 3c),
- einem drehbeweglichen Schaltkörper (4), der zur drehstellungsabhängigen Freigabe oder Absperrung eines Fluidflusses zwischen dem ersten Wasseranschluss einerseits und den mehreren zweiten Wasseranschlüssen andererseits ausgebildet ist,
- einem axial beweglichen Betätigungselement (5) und
- einem Übertragungsmittel (6), das die Axialbewegung des Betätigungselements in die Drehbewegung des Schaltkörpers überträgt, wobei das Übertragungsmittel schaltkörperseitig einen Kontaktflächenkörper (7, 7'), der um eine Drehachse (8) drehbeweglich ausgebildet ist und mindestens drei um die Drehachse herum angeordnete Fingeranlageflächen (9, 9') aufweist, und betätigungselementseitig eine Betätigungsfingeranordnung (10) mit einem ersten Betätigungsfinger (11a, 11a') und einem zweiten Betätigungsfinger (11b, 11b') umfasst, die zur Anlage gegen jeweils eine der Fingeranlageflächen ausgebildet sind,
- wobei der erste Betätigungsfinger zur Ausübung einer den Kontaktflächenkörper (7, 7') drehenden Schubkraft auf die anliegende Fingeranlagefläche (9, 9') bei einer mit dem zweiten Betätigungsfinger gemeinsamen Axialbewegung parallel zu einer Betätigungsachse (12) in einer ersten Richtung (P1, P1') ausgebildet ist und
- wobei der zweite Betätigungsfinger zur Ausübung einer den Kontaktflächenkörper drehenden Zugkraft auf die anliegende Fingeranlagefläche bei einer mit dem ersten Betätigungsfinger gemeinsamen Axialbewegung parallel zu der Betätigungsachse in einer der ersten Richtung entgegengesetzten zweiten Richtung (P2, P2') ausgebildet ist.

2. Sanitäre Umschalteinrichtung nach Anspruch 1, wobei die Betätigungsachse (12) nicht-parallel zu der Drehachse (8) liegt.

3. Sanitäre Umschalteinrichtung nach Anspruch 1 oder 2, wobei die Betätigungsachse (12) und die Drehachse (8) in einer gemeinsamen Ebene liegen.

4. Sanitäre Umschalteinrichtung nach einem der Ansprüche 1 bis 3, wobei die mindestens drei Fingeranlageflächen (9') zwischen dem Schaltkörper (4) und einer dem Schaltkörper abgewandten Stirnseite (13') des Kontaktflächenkörpers (7') an einem Umfang (30) des Kontaktflächenkörpers angeordnet sind.

5. Sanitäre Umschalteinrichtung nach einem der Ansprüche 1 bis 4, wobei die mindestens drei Fingeranlageflächen (9) an einer dem Schaltkörper (4) abgewandten Stirnseite (13) des Kontaktflächenkörpers (7) angeordnet sind.

6. Sanitäre Umschalteinrichtung nach einem der Ansprüche 1 bis 5, wobei
- der Kontaktflächenkörper (7, 7') eine sägezahnförmige Kontaktflächenkontur (14, 14') aufweist, welche die mindestens drei Fingeranlageflächen (9, 9') und Schrägflächen (15, 15') zwischen jeweils zwei der um die Drehachse (8) aufeinander folgenden Fingeranlageflächen umfasst, wobei die Schrägflächen Aufgleitflächen für den mindestens einen Betätigungsfinger (11a, 11b, 11a', 11b') bilden, und/oder
- der mindestens eine Betätigungsfinger eine Betätigungsanlagefläche (16a, 16b, 16a', 16b') zur Anlage gegen die Fingeranlageflächen und eine der Betätigungsanlagefläche abgewandte Schrägfläche (31) als Aufgleitfläche von je einer der Fingeranlageflächen zur nächsten umfasst.

7. Sanitäre Umschalteinrichtung nach einem der Ansprüche 1 bis 6, wobei der mindestens eine Betätigungsfinger (11a, 11b, 11a', 11b') biegeelastisch an dem Betätigungselement (5) angeordnet ist.

8. Sanitäre Umschalteinrichtung nach einem der Ansprüche 1 bis 7, wobei die sanitäre Umschalteinrichtung (1) ein rohrförmiges Gehäuse (17, 17', 17") umfasst, wobei das Betätigungselement (5) an einem Umfang (18) des Gehäuses und der Schaltkörper (4) sowie das Übertragungsmittel (6) in dem Gehäuse angeordnet sind, wobei eine Drehachse (19) des Schaltkörpers parallel zu einer Längsachse (20) des Gehäuses liegt.

9. Sanitäre Umschalteinrichtung nach einem der Ansprüche 1 bis 8, wobei
- das Betätigungselement (5) eine Drucktaste umfasst, die zwischen zwei axialen Endpositionen beweglich ist, und die sanitäre Umschalteinrichtung eine Feder (21) aufweist, welche die Drucktaste in eine der beiden Endpositionen beaufschlagt, und/oder
- die sanitäre Umschalteinrichtung (1) ein Gehäuse (17, 17', 17") und einen starren Stift (24) umfasst, der an dem Betätigungselement (5) fest angeordnet ist und den Kontaktflächenkörper (7, 7') entlang seiner Drehachse (8) in einer Richtung in dem Gehäuse sichert.

10. Sanitäre Umschalteinrichtung nach einem der Ansprüche 1 bis 9, wobei
- der Schaltkörper (4) eine Steuerscheibe (22, 22') mit mindestens einer Steueröffnung (23) und einer sägezahnförmigen Schaltkörper-Flächenkontur (32) mit mehreren Schaltkörper-Schrägflächen (33) umfasst und
- die sanitäre Umschalteinrichtung (1) einen Wasseranschlusskörper (26, 26', 26") aufweist, der Wasseranschlussöffnungen für die mehreren zweiten Wasseranschlüsse (3a, 3b, 3c) und eine sägezahnförmige Anschlusskörper-Flächenkontur (34) mit mehreren Anschlusskörper-Schrägflächen (35) umfasst,
- wobei sich die Steueröffnung und die Wasseranschlussöffnungen über aufeinander abgestimmte Winkelbereiche erstrecken und
- die Anschlusskörper-Schrägflächen Aufgleitflächen für die Schaltkörper-Schrägflächen bilden.

11. Sanitärarmatur mit
- einer Wasserzuleitung,
- mehreren Wasseraustrittsöffnungen und
- einer sanitären Umschalteinrichtung (1) nach einem der Ansprüche 1 bis 10,
- wobei die Wasserzuleitung mit dem ersten Wasseranschluss (2) in Fluidverbindung steht und jede der mehreren Wasseraustrittsöffnungen jeweils mit einem der mehreren zweiten Wasseranschlüsse (3a, 3b, 3c) in Fluidverbindung steht.

## Claims

1. Sanitary switching device, comprising
- a first water connection (2),
- a multiplicity of second water connections (3a, 3b, 3c),
- a rotationally movable switching body (4) which is configured for enabling or blocking a fluid flow between the first water connection on the one side and the multiplicity of second water connections on the other side, as a function of the rotational position,
- an axially movable actuating element (5), and
- a transmission means (6) to transmit the axial movement of the actuating element into the rotational movement of the switching body, wherein the transmission means comprises on a switching body side a contact surface body (7, 7') which is configured to be rotationally movable about a rotational axis (8) and has at least three finger engagement surfaces (9, 9') arranged around the rotational axis, and on an actuating element side an actuating finger assembly (10) including a first actuating finger (11a, 11a') and a second actuating finger (11b, 11b'), which fingers are configured for engagement with a respective one of the finger engagement surfaces,
- wherein the first actuating finger is configured for exerting a push force on the engaging finger engagement surface (9, 9') for rotating the contact surface body (7, 7') during a common axial movement together with the second actuating finger parallel to an actuation axis (12) in a first direction (P1, P1'), and
- wherein the second actuating finger is configured for exerting a pull force on the engaging finger engagement surface for rotating the contact surface body during a common axial movement together with the first actuating finger parallel to the actuation axis in a second direction (P2, P2') opposite to the first direction.

2. Sanitary switching device according to claim 1, wherein the actuation axis (12) is nonparallel to the rotational axis (8).

3. Sanitary switching device according to claim 1 or 2, wherein the actuation axis (12) and the rotational axis (8) are located in a common plane.

4. Sanitary switching device according to any one of claims 1 to 3, wherein the at least three finger engagement surfaces (9') are disposed between the switching body (4) and an end face (13') of the contact surface body (7') facing away from the switching body on a circumference (30) of the contact surface body.

5. Sanitary switching device according to any one of claims 1 to 4, wherein the at least three finger engagement surfaces (9) are disposed on an end face (13) of the contact surface body (7) facing away from the switching body (4).

6. Sanitary switching device according to any one of claims 1 to 5, wherein
- the contact surface body (7, 7') has a sawtooth-type contact surface contour (14, 14'), which contour comprises the at least three finger engagement surfaces (9, 9') and slant surfaces (15, 15') between respectively two of the finger engagement surfaces successively arranged about the rotational axis (8), wherein the slant surfaces constitute up-sliding surfaces for the at least one actuating finger (11a, 11b, 11a', 11b'), and/or
- the at least one actuating finger comprises an actuating engagement surface (16a, 16b, 16a', 16b') for engagement with the finger engagement surfaces and a slant surface (31) facing away from the actuating engagement surface as an up-sliding surface from a respective one of the finger engagement surfaces to a next one.

7. Sanitary switching device according to any one of claims 1 to 6, wherein the at least one actuating finger (11a, 11b, 11a', 11b') is arranged at the actuating element (5) to be resiliently flexible.

8. Sanitary switching device according to any one of claims 1 to 7, wherein the sanitary switching device (1) comprises a tubular housing (17, 17', 17"), wherein the actuating element (5) is disposed on a circumference (18) of the housing and the switching body (4) and the transmission means (6) are disposed within the housing, wherein a rotational axis (19) of the switching body is in parallel to a longitudinal axis (20) of the housing.

9. Sanitary switching device according to any one of claims 1 to 8, wherein
- the actuating element (5) comprises a push button which is displaceable between two axial end positions, and the sanitary switching device includes a spring (21) which acts on the push button in one of the two end positions, and/or
- the sanitary switching device (1) comprises a housing (17, 17', 17") and a rigid pin (24), which pin is fixedly arranged at the actuating element (5) and secures the contact surface body (7, 7') along its rotational axis (8) in one direction in the housing.

10. Sanitary switching device according to any one of claims 1 to 9, wherein
- the switching body (4) comprises a control disk (22, 22') having at least one control opening (23) and a sawtooth-type switching body surface contour (32) including a plurality of switching body slant surfaces (33), and
- the sanitary switching device (1) comprises a water connecting body (26, 26', 26"), which water connecting body comprises water connection openings for the multiplicity of second water connections (3a, 3b, 3c) and a sawtooth-type connecting body surface contour (34) including a multiplicity of connecting body slant surfaces (35),
- wherein the control opening and the water connection openings extend over mutually adjusted angular ranges, and
- the connecting body slant surfaces constitute up-sliding surfaces for the switching body slant surfaces.

11. Sanitary fitting, including
- a water supply line,
- a multiplicity of water outlet openings, and
- a sanitary switching device (1) according to any one of claims 1 to 10,
- wherein the water supply line is in fluid communication with the first water connection (2), and each of the multiplicity of water outlet openings is in fluid communication with a respective one of the multiplicity of second water connections (3a, 3b, 3c).

## Revendications

1. Dispositif de commutation sanitaire comprenant
- un premier raccord d'eau (2) ;
- une pluralité de deuxièmes raccords d'eau (3a, 3b, 3c) ;
- un corps de commutation mobile en rotation (4) qui est formé pour autoriser ou arrêter un débit de fluide, entre le premier raccord d'eau d'une part et la pluralité de deuxièmes raccords d'eau d'autre part, en fonction de la position de rotation,
- un élément d'actionnement (5) mobile axialement et
- un moyen de transmission (6) qui transmet le mouvement axial de l'élément d'actionnement en mouvement rotatif du corps de commutation, dans lequel le moyen de transmission comprend, du côté du corps de commutation, un corps de surface de contact (7, 7') qui est formé de manière à être mobile en rotation autour d'un axe de rotation (8), et présente au moins trois surfaces de contact de doigt (9, 9') agencées autour de l'axe de rotation, et inclut, du côté de l'élément d'actionnement, un agencement de doigts d'actionnement (10) avec un premier doigt d'actionnement (11a, 11a') et un deuxième doigt d'actionnement (11b, 11b') qui sont formés chacun pour venir en appui contre l'une des surfaces de contact de doigt,
- dans lequel le premier doigt d'actionnement est formé pour exercer une force de poussée mettant en rotation le corps de surface de contact (7, 7') sur la surface de contact de doigt (9, 9') adjacente, avec un mouvement axial commun au deuxième doigt d'actionnement, parallèlement à un axe d'actionnement (12) dans une première direction (P1, P1') et
- dans lequel le deuxième doigt d'actionnement est formé pour exercer une force de traction mettant en rotation le corps de surface de contact sur la surface de contact de doigt adjacente, lors d'un mouvement axial commun avec le premier doigt d'actionnement, parallèlement à l'axe d'actionnement dans une deuxième direction (P2, P2') opposée à la première direction.

2. Dispositif de commutation sanitaire selon la revendication 1, dans lequel l'axe d'actionnement (12) n'est pas parallèle à l'axe de rotation (8).

3. Dispositif de commutation sanitaire selon la revendication 1 ou 2, dans lequel l'axe d'actionnement (12) et l'axe de rotation (8) sont dans un plan commun.

4. Dispositif de commutation sanitaire selon l'une des revendications 1 à 3, dans lequel lesdites au moins trois surfaces de contact de doigt (9') sont agencées entre le corps de commutation (4) et une face frontale (13') du corps de surface de contact (7') opposée au corps de commutation, au niveau d'un pourtour (30) du corps de surface de contact.

5. Dispositif de commutation sanitaire selon l'une des revendications 1 à 4, dans lequel lesdites au moins trois surfaces de contact de doigt (9) sont agencées au niveau d'une face frontale (13) du corps de surface de contact (7), opposée au corps de commutation (4),

6. Dispositif de commutation sanitaire selon l'une des revendications 1 à 5, dans lequel
- le corps de surface de contact (7, 7') présente un contour de surface de contact (14, 14') en dents de scie, lequel inclut lesdites au moins trois surfaces de contact de doigt (9, 9') et des surfaces inclinées (15, 15') à chaque fois entre deux surfaces de contact de doigt qui se suivent mutuellement autour de l'axe de rotation (8), dans lequel les surfaces inclinées forment des surfaces de glissement pour ledit au moins un doigt d'actionnement (11a, 11b, 11a', 11b'), et/ou
- ledit au moins un doigt d'actionnement comprend une surface de contact d'actionnement (16a, 16b, 16a', 16b') pour venir en appui contre les surfaces de contact de doigt, et une surface inclinée (31), opposée à la surface de contact d'actionnement, à titre de surface de glissement de l'une des surfaces de contact de doigt respective vers la suivante.

7. Dispositif de commutation sanitaire selon l'une des revendications 1 à 6, dans lequel ledit au moins un doigt d'actionnement (11a, 11b, 11a', 11b') est agencé au niveau de l'élément d'actionnement (5) de manière élastiquement flexible.

8. Dispositif de commutation sanitaire selon l'une des revendications 1 à 7, dans lequel le dispositif de commutation sanitaire (1) inclut un boîtier tubulaire (17, 17', 17"), dans lequel l'élément d'actionnement (5) est agencé au niveau d'un pourtour (18) du boîtier, et le corps de commutation (4) ainsi que le moyen de transmission (6) sont agencés dans le boîtier, dans lequel un axe de rotation (19) du corps de commutation est parallèle à un axe longitudinal (20) du boîtier.

9. Dispositif de commutation sanitaire selon l'une des revendications 1 à 8, dans lequel
- l'élément d'actionnement (5) inclut un bouton-poussoir qui peut se déplacer entre deux positions axiales de fin de course, et le dispositif de commutation sanitaire comprend un ressort (21) qui pousse le bouton-poussoir vers l'une des deux positions de fin de course, et/ou
- le dispositif de commutation sanitaire (1) inclut un boîtier (17, 17', 17") et une tige rigide (24) qui est agencée de manière solidaire sur l'élément d'actionnement (5) et bloque le corps de surface de contact (7, 7') dans le boîtier le long de son axe de rotation (8) dans une direction.

10. Dispositif de commutation sanitaire (1) selon l'une des revendications 1 à 9, dans lequel
- le corps de commutation (4) inclut un disque de commande (22, 22') avec au moins une ouverture de commande (23) et un contour de surface du corps de commutation (32) en dents de scie avec plusieurs surfaces inclinées (33) du corps de commutation et
- le dispositif de commutation sanitaire (1) comprend un corps de raccord d'eau (26, 26', 26") qui comprend des ouvertures de raccord d'eau pour la pluralité de deuxièmes raccords d'eau (3a, 3b, 3c) et un contour (34) de surface de l'élément de corps de raccord en dents de scie avec plusieurs surfaces inclinées (35) du corps de raccord,
- dans lequel l'ouverture de commande et les ouvertures de raccord d'eau s'étendent sur des plages angulaires accordées les unes aux autres,
- les surfaces inclinées du corps de raccord forment des surfaces de glissement pour les surfaces inclinées du corps de commutation.

11. Robinetterie sanitaire comprenant
- une conduite d'arrivée d'eau,
- plusieurs ouvertures de sortie d'eau et
- un dispositif de commutation sanitaire (1) selon l'une des revendications 1 à 10,
- dans lequel la conduite d'arrivée d'eau est en communication fluidique avec le premier raccord d'eau (2) et chaque ouverture parmi la pluralité d'ouvertures de sortie d'eau est en communication fluidique avec un raccord respectif parmi la pluralité de deuxièmes raccords d'eau (3a, 3b, 3c).
